# EUROPEAN PATENT SPECIFICATION

(11) **EP 3 761 404 B1**
(45) Date of publication and mention of the grant of the patent: **05.04.2023**
(21) Application number: 19760361.6
(22) Date of filing: 01.02.2019
(51) Int. Cl.: H01M 4/13, H01M 4/62, H01M 10/052, H01M 10/054

(54) **ANODE SLURRY COMPOSITION, AND ANODE AND SECONDARY BATTERY MANUFACTURED USING SAME**
ANODENSUSPENSIONSZUSAMMENSETZUNG, ANODE UND DAMIT HERGESTELLTE SEKUNDÄRBATTERIE
COMPOSITION DE SUSPENSION ÉPAISSE D'ANODE, ET ANODE AINSI QUE BATTERIE SECONDAIRE FABRIQUÉES AU MOYEN DE CETTE DERNIÈRE

(30) Priority: 02.03.2018 KR 20180025364
(43) Date of publication of application: 06.01.2021
(73) Proprietor: LG CHEM, LTD., Yeongdeungpo-gu, Seoul 07336 (KR)
(72) Inventor: CHOI, Cheol Hoon, Daejeon 34122 (KR); HAN, Seon Hee, Daejeon 34122 (KR); KANG, Min Ah, Daejeon 34122 (KR); HAN, Hye Soo, Daejeon 34122 (KR); RYU, Dong Jo, Daejeon 34122 (KR)
(74) Representative: Goddar, Heinz J.
(86) International application number: PCT/KR2019/001483
(87) International publication number: WO 2019/168278

(56) References cited:
- CN-A- 105 742 641
- JP-A- 2013 232 313
- JP-B2- 5 167 664
- JP-B2- 5 862 227
- KR-A- 20170 045 438

## Description

### TECHNICAL FIELD

### Technical Field

The present invention relates to a negative electrode slurry composition, and a negative electrode and a secondary battery manufactured using the same, and more particularly, to a negative electrode slurry composition, which may accomplish excellent electrode adhesiveness in a high energy electrode, and a negative electrode and a secondary battery manufactured using the same.

### BACKGROUND ART

Secondary batteries are batteries repeatedly used through processes of discharging converting chemical energy into electric energy and charging in a reverse direction. Generally, secondary batteries are composed of a positive electrode, a negative electrode, an electrolyte and a separator. The negative electrode is manufactured through preparing a negative electrode slurry by mixing a negative electrode active material intercalating and deintercalating lithium ions from a positive electrode, with a conductive agent, a binder, a dispersant and a viscosity increasing agent, coating this negative electrode slurry on an electrode current collector such as a copper foil, drying and rolling.

In the conventional negative electrode slurry composition, in order to adjust the viscosity and dispersibility of a slurry composition, carboxymethyl cellulose (CMC) was mostly used as a dispersant and a viscosity increasing agent. However, since CMC has brittleness, if used in a high energy electrode having a high active material content, problems of degrading electrode adhesiveness and possibly inducing the deintercalation phenomenon of an electrode during electrode slitting, may arise.

Meanwhile, recently, a lithium secondary battery has been mainly used as a secondary battery, but lithium reserves are limited, and attempts on developing novel secondary batteries which may replace the lithium secondary battery have been conducted. Particularly, development on a sodium secondary battery, a manganese secondary battery, using sodium or manganese, as the replacement of the lithium secondary battery is being conducted. However, if an electrode material used in the conventional lithium secondary battery is applied to the sodium secondary battery, the manganese secondary battery, etc., there are defects including lack of capacity development, rapid capacity degradation, property deterioration, etc.

Accordingly, the development of a novel electrode material which may secure excellent stability in a negative electrode slurry which has a high active material content, may decrease defect generation in a post-process such as electrode slitting, and may be applied to a novel battery using sodium and/or manganese to accomplish excellent electrode properties, is required.

### <Prior Art Document>

(Patent Document 1) Korean Patent Laid-open No. 2014-0103376 (publication date: 2014.08.27)

CN 105742641 A discloses a porous electrode comprising, as an electrode slurry composition, a conductive paint comprising an active material, a hydrophobically modified alkali-swellable thickener and a solvent.

### DISCLOSURE OF THE INVENTION

### TECHNICAL PROBLEM

An aspect of the present invention to solve the above-described problems is to provide a negative electrode slurry composition which may accomplish excellent electrode adhesiveness in a high energy electrode.

In addition, there is provided in the present invention a negative electrode slurry composition which may be applied to a secondary battery using sodium or manganese as well as a lithium secondary battery.

In addition, there is provided a negative electrode and a secondary battery, manufactured using the negative electrode slurry composition.

### TECHNICAL SOLUTION

According to an aspect of the present invention, there is provided a negative electrode slurry composition, including a negative electrode active material; a hydrophobically modified alkali-swellable emulsion; and a solvent.

In this case, the alkali-swellable emulsion may be included in 0.1 to 5 parts by weight, preferably, 0.1 to 3 parts by weight, more preferably, 1 to 3 parts by weight based on 100 parts by weight of a total solid content in the negative electrode slurry composition.

Meanwhile, the alkali-swellable emulsion may be a dispersion which an acrylic polymer having a hydrophobic functional group and an acid functional group is dispersed in water, and the acrylic polymer may include a polymer electrolyte main chain to which the hydrophobic functional group is bonded as a pendant group.

Meanwhile, the hydrophobic functional group may be an alkyl group of 5 to 20 carbon atoms.

According to another aspect of the present invention, there are provided a negative electrode including a current collector, and a negative electrode material active layer formed on at least one side of the current collector, wherein the negative electrode active material layer is formed by the negative electrode slurry composition, and a secondary battery including the same.

Further embodiments are disclosed in the dependent claims.

### ADVANTAGEOUS EFFECTS

The negative electrode slurry composition according to the present invention, including a hydrophobically modified alkali-swellable emulsion has excellent slurry stability, and when an electrode is manufactured using the same, electrode adhesiveness may increase and electrode deintercalation phenomenon in a post-process such as electrode slitting may be effectively restrained to decrease the generation of defects.

### BEST MODE FOR CARRYING OUT THE INVENTION

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The terms used herein are for the purpose of describing particular example embodiments only and are not intended to limit the present invention. The singular forms are intended to include the plural forms as well, unless the context clearly indicates otherwise.

It will be understood that the terms "comprise" "include" or "have", when used in this specification, specify the presence of stated features, steps, elements or the combination thereof, but do not preclude the presence or addition of one or more other features, steps, elements or the combination thereof.

In this specification, "%" means wt%, unless otherwise explicitly indicated.

Hereinafter, the present invention will be explained in particular.

### Negative electrode slurry composition

First, the negative electrode slurry composition according to the present invention will be explained.

The negative electrode slurry composition according to the present invention includes (1) a negative electrode active material, (2) a hydrophobically modified alkali-swellable emulsion, and (3) a solvent.

The inventors of the present invention found that the stability of a slurry composition could be secured though the active material content in the slurry composition is high by using the hydrophobically modified alkali-swellable emulsion instead of a dispersant and/or a viscosity increasing agent, which have been primarily used in the conventional negative electrode slurry composition, and a negative electrode showing higher electrode adhesiveness and a few defects such as electrode deintercalation when compared with a case of forming an electrode using a slurry composition using the conventional dispersant and/or a viscosity increasing agent such as CMC, could be manufactured, and completed the present invention.

Hereinafter, each component of the negative electrode slurry composition according to the present invention will be explained in detail.

### (1) Negative electrode active material

The negative electrode active material may use materials which may absorb and release lithium, sodium, and/or manganese ions, and the kind thereof is not specifically limited. For example, as the negative electrode active material, a carbonaceous material such as natural graphite, artificial graphite, hard carbon and soft carbon; a simple substance of an element for alloying with M (M is lithium, sodium or manganese), such as Si, Ge, Sn, Pb, In, Zn, Ca, Sr, Ba, Ru, Rh, Ir, Pd, Pt, Ag, Au, Cd, Hg, Ga, Tl, C, N, Sb, Bi, O, S, Se, Te, and Cl, an alloy thereof, an oxide including the elements (SiOₓ, (0<x<2), tin dioxide (SnO₂), SnOₓ (0<x<2), SnSiO₃, etc.) and a carbide (silicon carbide (SiC), etc.); titanium dioxide or M-transition metal composite oxide (where M is lithium, sodium or manganese) such as M-titanium composite oxide (where M is lithium, sodium or manganese), etc., may be used, without limitation. These negative electrode active materials may be used alone or two or more thereof may be used in combination.

The negative electrode active material may be included in 80 to 99.7 parts by weight, preferably, 90 to 99.5 parts by weight, more preferably, 90 to 98 parts by weight based on 100 parts by weight of the total solid content of the negative electrode slurry composition. If the amount of the negative electrode active material satisfies the above-described range, excellent capacity properties may be achieved.

### (2) Hydrophobically modified alkali-swellable emulsion

The hydrophobically modified alkali-swellable emulsion is for improving the dispersibility of the slurry composition and keeping an appropriate viscosity of the slurry composition.

The alkali-swellable emulsion is a dispersion obtained by dispersing an acrylic polymer having an acid functional group in water, which has a hard coil-type structure by the agglomeration of a polymer chain in an acidic atmosphere of pH 5 or less, but has swelling properties by the straightening of the polymer chain in an alkali atmosphere of pH 7 or more. In this case, the acrylic polymer having an acid functional group may be poly(meth)acrylic acid, etc., but is not limited thereto.

In the present invention, an alkali-swellable emulsion modified so as to have a hydrophobic functional group through the copolymerization of the alkali-swellable emulsion with a monomer having a hydrophobic functional group, is used. In this case, the hydrophobic functional group may be an aliphatic hydrocarbon having a long chain, for example, an alkyl group of 5 to 20 carbon atoms.

Particularly, the alkali-swellable emulsion modified with the hydrophobic functional group may be a dispersion of an acrylic polymer including a hydrophobic functional group and an acid functional group, in water, more particularly, a dispersion of an acrylic polymer in which a hydrophobic functional group is bonded to a polymer electrolyte main chain having an acid functional group as a pendant group, in water.

The above-described hydrophobically modified alkali-swellable emulsion may be purchased from commercially available products and used, for example, ASE, HASE, HEUR, etc., of BASF Co., may be used.

In case of adding the hydrophobically modified alkali-swellable emulsion to the negative electrode slurry composition, the dispersibility of the slurry composition is improved, a viscosity is decreased, and the stability of the slurry composition is improved.

In addition, in case of manufacturing an electrode using a negative electrode slurry composition including the hydrophobically modified alkali-swellable emulsion, higher electrode adhesiveness may be achieved when compared with the conventional method, and the deintercalation of an electrode in a post-process such as an electrode slitting process may be effectively restrained.

Meanwhile, the hydrophobically modified alkali-swellable emulsion may be included in 0.1 to 5 parts by weight, preferably, 0.1 to 3 parts by weight, more preferably, 1 to 3 parts by weight, based on 100 parts by weight of the total solid content in the negative electrode slurry composition. If the amount of the hydrophobically modified alkali-swellable emulsion satisfies the above-described range, the phase stability of the negative electrode slurry and the adhesiveness of the electrode are excellent, and the life characteristics and resistance properties of a battery are excellent.

### (3) Solvent

The negative electrode slurry composition according to the present invention may include water as a solvent. The solvent may be included so that the negative electrode slurry composition has an appropriate viscosity.

### (4) Other components

Meanwhile, the negative electrode slurry composition according to the present invention may additionally include components such as a binder, a conductive agent and/or a filler in addition to the above-described components, as necessary.

The binder may include at least one selected from the group consisting of polyvinylidenefluoride-hexafluoropropylene copolymer (PVDF-co-HFP), polyvinylidenefluoride (PVDF), polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, ethylenepropylene-diene monomer (EPDM), sulfonated EPDM, styrenebutadiene rubber (SBR), fluorinated rubber, poly acrylic acid, and materials in which hydrogens therein are substituted with Li, Na, Ca, etc., and various copolymers thereof may be included.

In this case, the binder may be included in 0.1 to 10 parts by weight, preferably, 0.1 to 5 parts by weight based on 100 parts by weight of the total solid content in the negative electrode slurry composition.

The conductive agent may be any material without particular limitation so long as it has conductivity without causing chemical changes in a battery. For example, a conductive material such as graphite such as natural graphite and artificial graphite; carbon black materials such as carbon black, acetylene black, Ketjen black, channel black, furnace black, lamp black, and thermal black; conductive fibers such as carbon fibers and metal fibers; conductive tubes such as carbon nanotubes; metal powder such as fluorocarbon powder, aluminum powder, and nickel powder; conductive whiskers of zinc oxide, potassium titanate etc.; a conductive metal oxide such as titanium oxide; and polyphenylene derivatives, may be used.

In this case, the conductive agent may be included in 0.1 to 5 parts by weight, preferably, 0.1 to 3 parts by weight based on 100 parts by weight of the total solid content in the negative electrode slurry composition.

The filler is a component restraining the swelling of an electrode and is selectively used, and may be any material without particular limitation so long as it is a fibrous material without causing chemical changes in a battery. For example, an olefin-based polymer such as polyethylene and polypropylene; and a fibrous material such as glass fiber and carbon fiber, may be used.

In this case, the filler may be included in 0.1 to 5 parts by weight, preferably, 0.1 to 3 parts by weight based on 100 parts by weight of the total solid content in the negative electrode slurry composition.

The negative electrode slurry composition of the present invention, including the hydrophobically modified alkali-swellable emulsion has excellent phase stability and low viscosity and has excellent processability though the active material content is high when compared with the conventional negative electrode slurry composition. In addition, the negative electrode manufactured using the above-described negative electrode slurry composition has excellent electrode adhesiveness, show a few electrode deintercalation in a post-process such as electrode slitting and a few defects, thereby achieving excellent battery properties.

### Negative electrode

Then, the negative electrode according to the present invention will be explained.

The negative electrode of the present invention includes a negative electrode active material layer formed by the negative electrode slurry composition according to the present invention.

For example, the negative electrode according to the present invention includes a current collector, and a negative electrode active material layer formed on at least one side of the current collector. In this case, the negative electrode active material layer is formed using the negative electrode slurry composition according to the present invention, that is, the negative electrode slurry composition including the negative electrode active material, the hydrophobically modified alkali-swellable emulsion and the solvent, on the current collector. The negative electrode slurry composition is the same as described above, and particular explanation thereof will be omitted.

The current collector is not specifically limited as long as it has conductivity without causing chemical changes in a battery. For example, copper, stainless steel, aluminum, nickel, titanium, fired carbon, copper or stainless steel of which surface is treated with carbon, nickel, titanium, silver, etc., an aluminum-cadmium alloy, etc., may be used. In addition, the bonding force of the negative electrode active material may be reinforced by forming minute irregularities on the surface thereof, and may be used in various shapes, such as a film, a sheet, a foil, a net, a porous body, a foam body, and a non-woven fabric body.

The negative electrode may be manufactured by a commonly known method in the art, for example, may be manufactured by a method including applying the negative electrode slurry composition according to the present invention on a current collector, drying and rolling.

### Secondary battery

Then, the secondary battery according to the present invention will be explained.

The secondary battery of the present invention includes the negative electrode according to the present invention. Particularly, the secondary battery may include a positive electrode, a negative electrode, a separator disposed between the positive electrode and the negative electrode, and an electrolyte, and in this case, the negative electrode is a negative electrode including a negative electrode active material, formed by the negative electrode slurry composition of the present invention. The negative electrode slurry composition and the negative electrode are described above, and only remaining elements will be explained hereinafter.

The positive electrode includes a positive electrode current collector and a positive electrode active material layer formed on the positive electrode current collector. The positive electrode active material layer includes a positive electrode active material, and may further include a binder, a conductive agent and/or a filler, as necessary.

Meanwhile, as the positive electrode active material, a material which is capable of absorbing and releasing lithium, sodium, and/or manganese ions may be used, for example, a layered oxide-based material such as M-iron composite oxide (MFeO₂, etc., M is lithium, sodium or manganese), M-cobalt composite oxide (MCoO₂, etc., M is lithium, sodium or manganese), M-chromium composite oxide (MCrO₂, etc., M is lithium, sodium or manganese), M-manganese composite oxide (MMnO₂, M_{2/3}MnO₂, MMn₂O₄, etc., M is lithium, sodium or manganese), M-nickel composite oxide (MNiO₂, etc., M is lithium, sodium or manganese), M-nickel-titanium composite oxide (MNiₐTi_{b}O₂, M is lithium, sodium or manganese, 0<a<1, 0<b<1, a+b=1), M-nickel-manganese composite oxide (MNiₐMn_{b}O₂, M is lithium, sodium or manganese, 0<a<1, 0<b<1, a+b=1), M-iron-manganese composite oxide (M_{2/3}FeₐMn_{b}O₂, M is lithium, sodium or manganese, 0<a<1, 0<b<1, a+b=1), and M-nickel-cobalt-manganese composite oxide (MNiₐCo_{b}Mn_{c}O₂, M is lithium, sodium or manganese, 0<a<1, 0<b<1, 0<c<1, a+b+c=1), an olivine-based material such as M-iron phosphoric acid compound (MFePO₄, M is lithium, sodium or manganese), M-manganese phosphoric acid compound (MMnPO₄, M is lithium, sodium or manganese), and M-cobalt phosphoric acid compound (MCoPO₄, M is lithium, sodium or manganese), a fluorinated olivine-based material such as M₂FePO₄F, M₂MnPO₄F, M₂CoPO₄F (M is lithium, sodium or manganese), or a solid solution or a compound of non-stoichiometric composition thereof, may be used, without limitation.

In addition, the binder may include at least one selected from the group consisting of polyvinylidenefluoride-hexafluoropropylene copolymer (PVDF-co-HFP), polyvinylidenefluoride (PVDF), polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, ethylenepropylene-diene monomer (EPDM), sulfonated EPDM, styrenebutadiene rubber (SBR), fluorinated rubber, poly acrylic acid, and materials in which hydrogens therein are substituted with Li, Na, Ca, etc., and various copolymers thereof may be included.

Any conductive agent may be used without particular limitation so long as it has conductivity without causing adverse chemical changes in a battery. For example, the conductive agent may include a conductive material such as graphite such as natural graphite and artificial graphite; carbon black materials such as carbon black, acetylene black, Ketjen black, channel black, furnace black, lamp black, and thermal black; conductive fibers such as carbon fibers and metal fibers; conductive tubes such as carbon nanotubes; metal powder such as fluorocarbon powder, aluminum powder, and nickel powder; conductive whiskers of zinc oxide, potassium titanate, etc.; a conductive metal oxide such as titanium oxide; and polyphenylene derivatives.

The filler is a component restraining the swelling of an electrode and selectively used. Any material could be used without specific limitation as long as it is a fibrous material without inducing chemical change to a battery, for example, an olefin-based polymer such as polyethylene, and polypropylene; a fibrous material such as fiber glass and carbon glass may be used.

The separator separates the negative electrode and the positive electrode and provides a passage for the migration of lithium, sodium and/or manganese ions, and any separator used in a common secondary battery may be used without specific limitation, particularly, a separator having small resistance with respect to the ionic migration of an electrolyte and showing excellent electrolyte impregnation capacity is preferable. Particularly, a porous polymer film manufactured using a polyolefin polymer such as an ethylene homopolymer, a propylene homopolymer, an ethylene/butene copolymer, an ethylene/hexene copolymer, and an ethylene/methacrylate copolymer, or a laminated structure of two or more thereof, may be used. In addition, a typical porous nonwoven fabric, for example, a nonwoven fabric formed of high melting point glass fibers or polyethylene terephthalate fibers, may be used. In addition, in order to secure heat resistance or mechanical strength, a coated separator including a ceramic component or a polymer material may be used, and selectively, a monolayer or multilayer structure may be used.

The electrolyte is obtained by dissolving a M salt (M is lithium, sodium or manganese) in an organic solvent, and is preferably formed by including at least one among MClO₄, MAsF₆, MBF₄, MPF₆, MSbF₆, MCF₃SO₃ or MN(SO₂CF₃)₂, in an organic solvent. The organic solvent is preferably any one among ethylene carbonate, propylene carbonate, diethyl carbonate, dimethyl carbonate, ethyl methyl carbonate, isopropylmethyl carbonate, vinylene carbonate, fluoroethylene carbonate, 1,2-dimethoxyethane, 1,2-diethoxyethane, γ-butyrolactone, tetrahydrofuran, 2-methyltetrahydrofuran, 1,3-dioxane, 4-methyl-1,3-dioxane, diethyl ether and sulfolane, and one or more may be used in combination according to circumstances. It is effective to use these electrolytes for maximizing the performance of a sodium secondary battery using a negative electrode and a positive electrode.

### MODE FOR CARRYING OUT THE INVENTION

Hereinafter, the present invention will be explained in more particularly through preferred embodiments.

### Example 1

Negative electrode active material:hydrophobically modified alkali-swellable emulsion:binder:conductive agent were mixed in a weight ratio of 94.5:1:3:1.5 and dissolved in water to prepare a negative electrode slurry. In this case, as the negative electrode active material, a mixture of SiO:artificial graphite in a weight ratio of 3:7 was used, HASE of BASF Co. was used as the hydrophobically modified alkali-swellable emulsion, SBR (LG Chem, AD-B22) was used as the binder, and Super-C 65 (TIMCAL Co.) was used as the conductive agent.

### Example 2

A negative electrode slurry composition was prepared by the same method as in Example 1 except for mixing the negative electrode active material: hydrophobically modified alkali-swellable emulsion:binder:conductive agent in a weight ratio of 93.5:2:3:1.5.

### Example 3

A negative electrode slurry composition was prepared by the same method as in Example 1 except for mixing the negative electrode active material: hydrophobically modified alkali-swellable emulsion:binder:conductive agent in a weight ratio of 92.5:3:3:1.5.

### Comparative Example 1

Negative electrode active material: dispersant: binder: conductive agent were mixed in a weight ratio of 94.5:1:3:1.5 and dissolved in water to prepare a negative electrode slurry. In this case, as the negative electrode active material, a mixture of SiO:artificial graphite in a weight ratio of 3:7 was used, carboxymethyl cellulose (CMC) having a weight average molecular weight of 900,000 was used as the dispersant, SBR was used as the binder, and Super-C 65 was used as the conductive agent.

### Comparative Example 2

A negative electrode slurry composition was prepared by the same method as in Comparative Example 1 except for using carboxymethyl cellulose (CMC) having a weight average molecular weight of 1,700,000 instead of the carboxymethyl cellulose (CMC) having a weight average molecular weight of 900,000.

### Comparative Example 3

A negative electrode slurry composition was prepared by the same method as in Comparative Example 1 except for using carboxymethyl cellulose (CMC) having a weight average molecular weight of 2,700,000 instead of the carboxymethyl cellulose (CMC) having a weight average molecular weight of 900,000.

### Comparative Example 4

A negative electrode slurry composition was prepared by the same method as in Comparative Example 1 except for using polyacrylic acid having a weight average molecular weight of 200,000 instead of the carboxymethyl cellulose (CMC) having a weight average molecular weight of 900,000.

### Comparative Example 5

A negative electrode slurry composition was prepared by the same method as in Comparative Example 1 except for using a mixture of SBR:polyacrylic acid (weight average molecular weight of 200,000) in a weight ratio of 1:15 instead of SBR as the binder.

### Experimental Example 1

The viscosity of each of the negative electrode slurry compositions prepared by Examples 1-3 and Comparative Examples 1-5 was measured using spindle #2 of a Brookfield viscometer at 25°C in 60 rpm conditions. Measurement results are listed in Table 1 below.

### Experimental Example 2

Each of the negative electrode slurry compositions prepared by Examples 1-3 and Comparative Examples 1-5 was applied on a copper (Cu) metal thin film, which was a negative electrode current collector, dried at 90°C, roll pressed, and dried in a vacuum oven at 130°C for 8 hours to manufacture a negative electrode.

The electrode adhesiveness and electrode deintercalation amount of the negative electrode thus manufactured were measured by the methods below. Measurement results are listed in Table 1 below.

### (1) Adhesiveness [unit: N/mm (gf/inch)]

Each negative electrode thus manufactured was punched into an electrode with a width of 20 mm using a punching apparatus, roll pressed, and then dried in vacuum at 120°C for 12 hours. Then, onto a glass with a double-sided tape attached thereto, the applied side of the negative electrode slurry was attached and pressed using a roller, and then, 180-degree peel adhesiveness of an electrode was measured using a UTM apparatus.

### (2) Electrode deintercalation amount [unit: g]

Based on the loading value of the negative electrode, a theoretical electrode weight of each negative electrode manufactured above was computed. Then, each negative electrode manufactured above was punched into an electrode with a width of 20 mm using a punching apparatus, roll pressed, and then dried in vacuum at 120°C for 12 hours. Then, the weight of each negative electrode was measured, a difference from a theoretical electrode weight was calculated, and this difference was evaluated as the electrode deintercalation amount.

### Experimental Example 3: Evaluation of battery life

### <Manufacture of positive electrode>

A positive electrode mixture slurry was prepared by adding 97 wt% of Li[Ni_{0.8}Co_{0.1}Mn_{0.1}]O₂ as a positive electrode active material, 1 wt% of carbon black as a conductive agent, and 2 wt% of PVdF as a binder to a N-methyl-2-pyrrolidone (NMP) solvent. The positive electrode mixture slurry was applied on an aluminum (Al) thin film with a thickness of about 20 pm, which was a positive electrode current collector, dried and roll pressed to manufacture a positive electrode.

### <Manufacture of lithium secondary battery>

Between the positive electrode thus manufactured and the negative electrode manufactured in Experimental Example 2, a polypropylene separator was disposed. 1 M LiPF₆ was dissolved in a mixture solvent of ethylene carbonate (EC), propylene carbonate (PC) and ethyl methyl carbonate (EMC) in a volume ratio of 20:10:70 to prepare an electrolyte, and this electrolyte was injected to manufacture a secondary battery.

With respect to the secondary battery thus manufactured, charge and discharge test was conducted twice with a charge and discharge current density of 0.2 C, a charge final voltage of 4.5 V and a discharge final voltage of 2.5 V. After that, charge and discharge test was conducted 48 times with a charge and discharge current density of 1 C, a charge final voltage of 4.5 V and a discharge final voltage of 2.5 V. All charges were conducted with constant current/constant voltage, and the final current of constant voltage charge was 0.05 C. After finishing the test of total 50 cycles, a charge capacity after 50 cycles was divided by a charge capacity at an initial cycle to calculate a capacity retention ratio (50 times/once).

**[Table 1]**

| | Exam ple 1 | Exam ple 2 | Exam ple 3 | Comparat ive Example 1 | Compara tive Example 2 | Compara tive Example 3 | Comparat ive Example 4 | Compara tive Example 5 |
|---|---|---|---|---|---|---|---|---|
| Negative electrode slurry viscosity (cps) | 2500 | 5500 | 7500 | 4400 | 7000 | 10900 | 500 | 1600 |
| Electrode adhesivene ss N/mm(gf/in ch) | 0.02 0 (52. 3) | 0.01 9 (49. 0) | 0.01 2 (32. 3) | 0.011 (28.2) | 0.010 (25.7) | 0.010 (27.1) | 0.012 (31.5) | 0.010 (26.5) |
| Electrode deintercalation amount (g) | 0.5 | 0.7 | 0.6 | 4.7 | 3.9 | 8.8 | 4.5 | 5.7 |
| 50 cycle capacity retention ratio (%) | 95.4 | 93.7 | 90.6 | 84.7 | 73.9 | 68.8 | 53.9 | 55.2 |

As shown in Table 1, the negative electrode slurry compositions of Examples 1-3, which used the hydrophobically modified alkali-swellable emulsion, showed the viscosity of the slurry compositions of from 2500 to 7500 cps, and it could be found that the stability of the slurry compositions was excellent. In comparison, the negative electrode slurry compositions of Comparative Examples 1-3, which used the same amount of CMC as in Example 1, was found to have a higher viscosity when compared with the negative electrode slurry composition of Example 1. In addition, the negative electrodes manufactured using the negative electrode slurry compositions of Examples 1-3 showed higher electrode adhesiveness and lower electrode deintercalation amount when compared with the negative electrodes manufactured using the negative electrode slurry compositions of the Comparative Examples, and thus, if applied to a secondary battery, better life characteristics were secured when compared with the Comparative Examples.

Meanwhile, in case of Comparative Examples 4 and 5, which used polyacrylic acid not including a hydrophobic functional group, the viscosity of the slurry compositions was low, but electrode adhesiveness was low, and an electrode deintercalation amount was large, and thus, it was secured that life characteristics were markedly deteriorated.

## Claims

1. A negative electrode slurry composition, comprising:
a negative electrode active material;
a hydrophobically modified alkali-swellable emulsion; and
a solvent.

2. The negative electrode slurry composition according to claim 1, wherein the alkali-swellable emulsion is included in 0.1 to 5 parts by weight based on 100 parts by weight of a total solid content in the negative electrode slurry composition.

3. The negative electrode slurry composition according to claim 1, wherein the alkali-swellable emulsion is a dispersion which an acrylic polymer having a hydrophobic functional group and an acid functional groupis dispersed in water.

4. The negative electrode slurry composition according to claim 3, wherein the acrylic polymer comprises a polymer electrolyte main chain to which the hydrophobic functional group is bonded as a pendant group.

5. The negative electrode slurry composition according to claim 1, wherein the hydrophobic functional group is an alkyl group of 5 to 20 carbon atoms.

6. The negative electrode slurry composition according to claim 1, wherein the solvent comprises water.

7. The negative electrode slurry composition according to claim 1, wherein the negative electrode slurry composition further comprises at least one or more among a binder, a conductive agent and a filler.

8. The negative electrode slurry composition according to claim 1, comprising, based on 100 parts by weight of a total solid content in the negative electrode slurry composition:
80 to 99.7 parts by weight of the negative electrode active material;
0.1 to 5 parts by weight of the hydrophobically modified alkali-swellable emulsion;
0.1 to 10 parts by weight of a binder; and
0.1 to 5 parts by weight of a conductive agent.

9. A negative electrode comprising a current collector, and a negative electrode material active layer formed on at least one side of the current collector,
wherein the negative electrode active material layer is formed by the negative electrode slurry composition according to any one of claims 1 to 8.

10. A secondary battery comprising the negative electrode of claim 9.

## Patentansprüche

1. Negativelektrodenslurryzusammensetzung, umfassend:
ein Negativelektrodenaktivmaterial;
eine hydrophob-modifizierte Alkali-quellbare Emulsion; und
ein Lösungsmittel.

2. Negativelektrodenslurryzusammensetzung nach Anspruch 1, wobei die Alkali-quellbare Emulsion mit 0,1 bis 5 Gewichtsteilen, basierend auf 100 Gewichtsteilen eines Gesamtfeststoffgehalts in der Negativelektrodenslurryzusammensetzung, eingeschlossen ist.

3. Negativelektrodenslurryzusammensetzung nach Anspruch 1, wobei die Alkali-quellbare Emulsion eine Dispersion ist, bei der ein Acrylpolymer mit einer hydrophoben funktionellen Gruppe und einer sauren funktionellen Gruppe in Wasser dispergiert ist.

4. Negativelektrodenslurryzusammensetzung nach Anspruch 3, wobei das Acrylpolymer eine Polymerelektrolythauptkette umfasst, an die die hydrophobe funktionelle Gruppe als eine Seitengruppe angebunden ist.

5. Negativelektrodenslurryzusammensetzung nach Anspruch 1, wobei die hydrophobe funktionelle Gruppe eine Alkylgruppe von 5 bis 20 Kohlenstoffatomen ist.

6. Negativelektrodenslurryzusammensetzung nach Anspruch 1, wobei das Lösungsmittel Wasser umfasst.

7. Negativelektrodenslurryzusammensetzung nach Anspruch 1, wobei die Negativelektrodenslurryzusammensetzung ferner wenigstens eines oder mehrere aus einem Bindemittel, einem Leitfähigkeitsmittel und einem Füllstoff umfasst.

8. Negativelektrodenslurryzusammensetzung nach Anspruch 1, umfassend, basierend auf 100 Gewichtsteilen eines Gesamtfeststoffgehalts in der Negativelektrodenslurryzusammensetzung:
80 bis 99,7 Gewichtsteile des Negativelektrodenaktivmaterials;
0,1 bis 5 Gewichtsteile der hydyrophob modifizierten Alkali-quellbaren Emulsion;
0,1 bis 10 Gewichtsteile eines Bindemittels; und
0,1 bis 5 Gewichtsteile eines Leitfähigkeitsmittels.

9. Negativelektrode umfassend einen Stromsammler und eine Negativelektrodenmaterialaktivschicht, die auf wenigstens einer Seite des Stromsammlers gebildet ist,
wobei die Negativelektrodenaktivmaterialschicht durch die Negativelektrodenslurryzusammensetzung nach einem der Ansprüche 1 bis 8 gebildet ist.

10. Sekundärbatterie, die die Negativelektrode nach Anspruch 9 umfasst.

## Revendications

1. Composition barbotine d'électrode négative comprenant :
une matière active d'électrode négative ;
une émulsion alkali gonflable modifiée hydrophobe ; et
un solvant.

2. La composition barbotine d'électrode négative selon la revendication 1, l'émulsion alkali gonflable étant comprise dans 0,1 à 5 parties en poids, sur la base de 100 parties en poids d'une teneur totale en solides dans la composition barbotine d'électrode négative.

3. Composition barbotine d'électrode négative selon la revendication 1, l'émulsion alkali gonflable étant une dispersion comportant la dispersion dans l'eau d'un polymère acrylique possédant un groupe fonctionnel hydrophobe et un groupe fonctionnel acide.

4. Composition barbotine d'électrode négative selon la revendication 3, le polymère acrylique comprenant une chaîne principale d'électrolyte polymère à laquelle le groupe fonctionnel hydrophobe est lié en tant que groupe pendant.

5. Composition barbotine d'électrode négative selon la revendication 1, le groupe fonctionnel hydrophobe étant un groupe alkyle de 5 à 20 atomes de carbone.

6. Composition barbotine d'électrode négative selon la revendication 1, le solvant comprenant de l'eau.

7. Composition barbotine d'électrode négative selon la revendication 1, la composition barbotine d'électrode négative comprenant en outre au moins un ou plusieurs d'un liant, d'un agent conducteur, et d'un agent de remplissage.

8. Composition barbotine d'électrode négative selon la revendication 1, comprenant, sur la base de 100 parties en poids d'une teneur totale en solides dans la composition barbotine d'électrode négative :
de 80 à 99,7 parties en poids de la matière active d'électrode négative ;
de 0,1 à 5 parties en poids de l'émulsion alkali gonflable modifiée hydrophobe ;
de 0,1 à 10 parties en poids d'un liant ; et
de 0,1 à 5 parties en poids d'un agent conducteur.

9. Électrode négative comprenant un collecteur de courant, et une couche de matière active d'électrode négative formée sur au moins un côté du collecteur de courant,
la couche de matière active d'électrode négative étant formée par la composition barbotine d'électrode négative selon une quelconque des revendications 1 à 8.

10. Accumulateur comprenant l'électrode négative selon la revendication 9.
